# EUROPEAN PATENT APPLICATION

(11) **EP 3 771 521 A1**
(43) Date of publication of application: **03.02.2021**
(21) Application number: 20187858.4
(22) Date of filing: 27.07.2020
(51) Int. Cl.: B25C 1/04, B25C 1/06, B25C 7/00

(54) **NAIL GUN SYSTEM**

(30) Priority: 30.07.2019 TW 108210012 U
(71) Applicant: Basso Industry Corp., 40768 Taichung (TW)
(72) Inventor: PO, Chien-Kuo, 40768 Taichung (TW); CHEN, Hung-He, 40768 Taichung (TW)
(74) Representative: Grey, Ian Michael

(57) **Abstract**

A nail gun system includes a nail gun (3) and a measuring device (4). The nail gun includes a cylinder unit (32), an inlet valve (34) that is mounted to the cylinder unit (32) for allowing air to enter the cylinder unit (32), and a power unit (33) that is operable for increasing an air pressure inside the cylinder unit (32), and that is further operable for striking a nail (6) using the air pressure. The measuring device (4) is connected to the nail gun (3), and includes a pressure measurement module (41) that is adapted for measuring a pressure value (H) of the air inside the cylinder unit (32), and at least one display module (43) that includes a display section (431), and a first indicator (432) for indicating the pressure value (H) on the display section (431).

## Description

The disclosure relates to a nail gun, and more particularly to a nail gun system that includes a measuring device for measuring air pressure or temperature.

Referring to FIG. 1, a conventional nail gun 1 disclosed in U.S. Patent No. 8011547 B2 includes a machine body 11, a cylinder 12, a piston 13, a striking member 14 and a controlling member 15.

The cylinder 12 is mounted in the machine body 11. The piston 13 is movably disposed in the cylinder 12. The striking member 14 is co-movably connected to the piston 13, and is adapted for striking a nail 10. The controlling member 15 is mounted to the machine body 11, is rotatable by electric power, and is disengageably engaged with the striking member 14.

When the controlling member 15 is driven by electric power to rotate, it moves the striking member 14 and the piston 13 to pressurize air inside the cylinder 12. As the controlling member 15 rotates to a specific position, it becomes disengaged from the striking member 14, and then the pressurized air in the cylinder 12 pushes the piston 13, thereby urging the striking member 14 to strike the nail 10.

Such conventional nail gun 1 does not include a measuring device capable of measuring air pressure and/or temperature of the cylinder 12. Therefore, there is no way to evidently identify an air leakage in the cylinder 12 or high temperature in the cylinder 12 beforehand. If an air leakage is present in the cylinder 12, the air pressure inside the cylinder 12 would drop to compromise the nail-striking process. If the cylinder 12 is overheated, components of the nail gun 1 would become susceptible to deformation or damage. Thus, it is difficult for users to perform preventive measure (s) against any of the aforementioned issues if these were not able to be properly identified.

Therefore, the object of the disclosure is to provide a nail gun system that can alleviate at least one of the drawbacks of the prior art.

According to the disclosure, a nail gun system includes a nail gun and a measuring device.

The nail gun includes a cylinder unit, an inlet valve and a power unit. The inlet valve is mounted to the cylinder unit, and is adapted for allowing air to enter the cylinder unit. The power unit is operable for increasing an air pressure inside the cylinder unit, and is further operable for striking a nail using the air pressure.

The measuring device is connected to the nail gun, and includes a pressure measurement module and at least one display module. The pressure measurement module is adapted for measuring a pressure value of the air inside the cylinder unit. The at least one display module includes a display section, and a first indicator for indicating the pressure value on the display section.

Other features and advantages of the disclosure will become apparent in the following detailed description of the embodiment and its variations with reference to the accompanying drawings, of which:

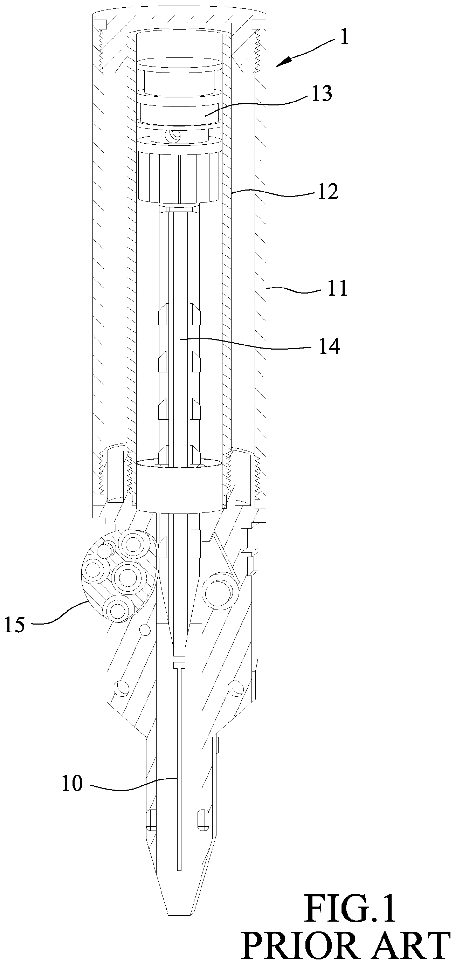

FIG. 1 is a sectional view of a conventional nail gun disclosed in U.S. Patent No. 8011547 B2;
FIG. 2 is a perspective view of an embodiment of a nail gun system according to the disclosure;
FIG. 3 is a sectional view illustrating the embodiment before striking a nail;
FIG. 4 is a block diagram illustrating a measuring device of the embodiment;
FIG. 5 is a sectional view illustrating the embodiment after striking the nail;
FIG. 6 is a block diagram illustrating the measuring device and a communication device of a variation of the embodiment;
FIG. 7 is a block diagram illustrating the measuring device and the communication device of another variation of the embodiment; and
FIG. 8 is a perspective view of yet another variation of the embodiment.

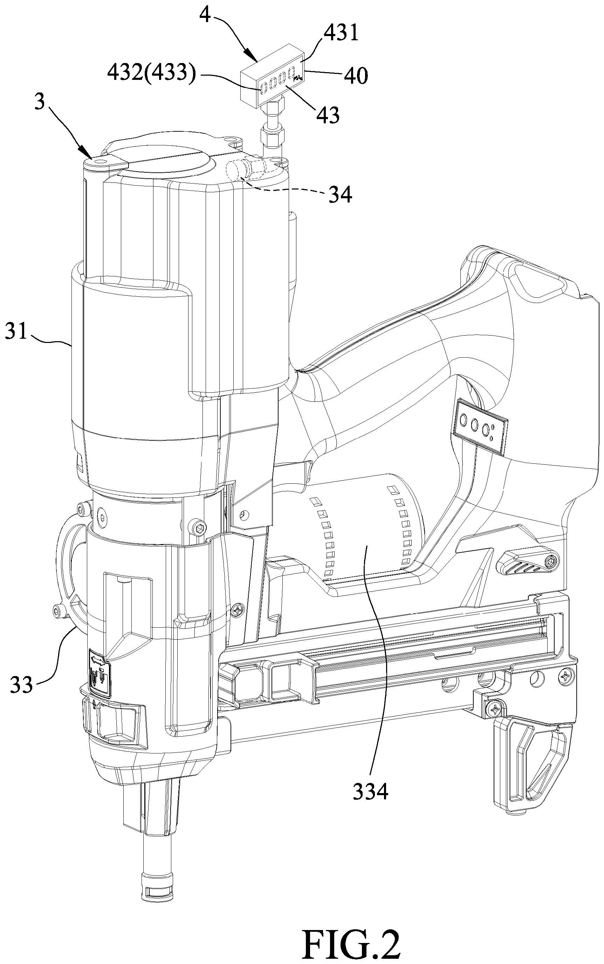

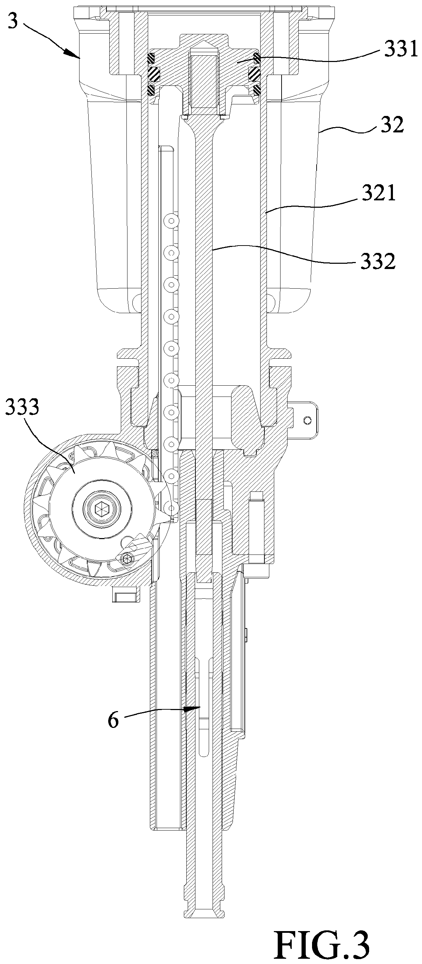

Referring to FIGS. 2, 3 and 4, an embodiment of a nail gun system according to the disclosure includes a nail gun 3 and a measuring device 4.

The nail gun 3 includes a machine body 31, a cylinder unit 32, a power unit 33 and an inlet valve 34.

The cylinder unit 32 has a cylinder 321 that is mounted in the machine body 31, and that is adapted for storing air. The inlet valve 34 is mounted to the cylinder unit 32, and is adapted for allowing air to enter and to be stored in the cylinder 321 of the cylinder unit 32.

The power unit 33 is operable for increasing an air pressure inside the cylinder unit 32, and is further operable for striking a nail 6 using the air pressure. Specifically, the power unit 33 includes a piston 331, a nail-striking group 332, a lifting gear 333 and a motor 334.

The piston 331 is disposed in the cylinder 321 of the cylinder unit 32, and is adapted to be driven by the air pressure inside the cylinder 321. The nail-striking group 332 is connected to the piston 331, and is adapted for striking the nail 6. The lifting gear 333 is disengageably engaged with the nail-striking group 332 and is rotatable to move the nail-striking group 332 and the piston 331 relative to the striking cylinder 321. The motor 334 is connected to the lifting gear 333 to drive rotation of the lifting gear 333.

The measuring device 4 is detachably and directly connected to the inlet valve 34 of the nail gun 3, and includes a main body 40, a pressure measurement module 41, a temperature measurement module 42 and a display module 43. It should be noted that, in variations of the present embodiment, the measuring device 4 may be directly connected to the cylinder unit 32 instead of the inlet valve 34.

In this embodiment, the pressure measurement module 41, the temperature measurement module 42 and the display module 43 are all disposed in the main body 40. The pressure measurement module 41 is adapted for measuring a pressure value (H) of the air inside the cylinder unit 32; the temperature measurement module 42 is adapted for measuring a temperature value (T) inside the cylinder unit 32. The display module 43 is electrically connected to the pressure measurement module 41 and the temperature measurement module 42, and includes a display section 431, a first indicator 432 and a second indicator 433. The first and second indicators 432, 433 respectively indicate the pressure value (H) and the temperature value (T) on the display section 431, and each of the first and second indicators 432, 433 is a digital number.

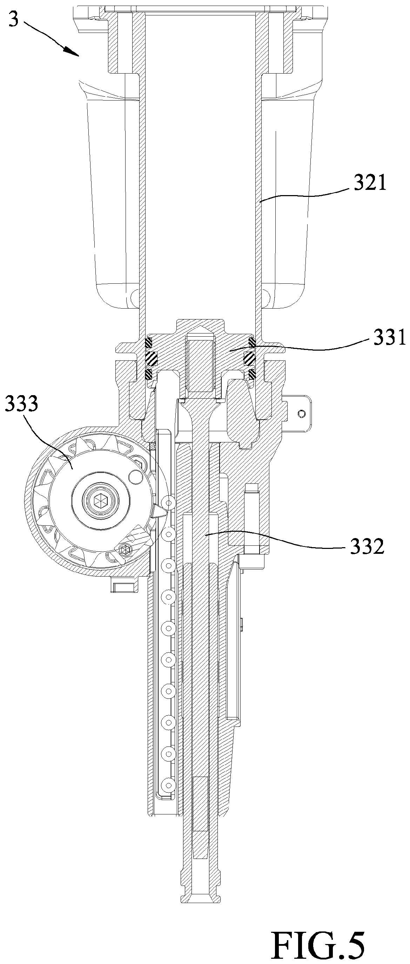

Referring to FIGS. 2, 3 and 5, to start a cycle of the nail-striking operation, the motor 334 drives the lifting gear 333 to rotate, which in turn moves the nail-striking group 332 and the piston 331 to compress the air inside the cylinder 321 for increasing the air pressure therein. The lifting gear 333 becomes disengaged from the nail-striking group 332 when it rotates to a certain position, such that the piston 331 and the nail-striking group 332 are subsequently urged by the air pressure to strike the nail 6.

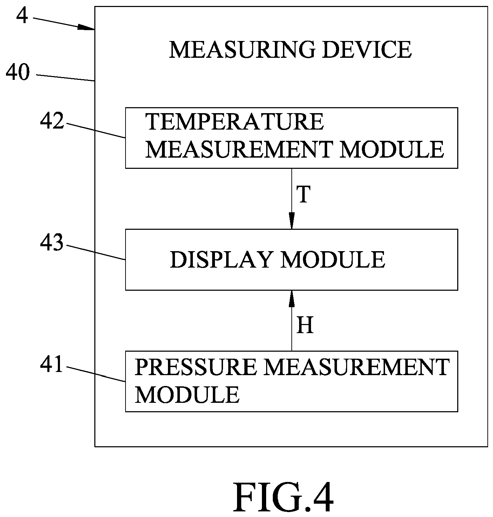

Referring also to FIG. 4, during the above-mentioned cycle of the nail-striking operation, the pressure measurement module 42 and temperature measurement module 43 respectively measure the pressure value (H) of the air inside the cylinder unit 32 and the temperature value (T) inside the cylinder unit 32, and respectively display them via the first and second indicators 432, 433 on the display section 431 of the display module 43. Thus, if the air pressure is too low or the temperature inside the cylinder unit 32 is too high, a user can identify it immediately and take action accordingly.

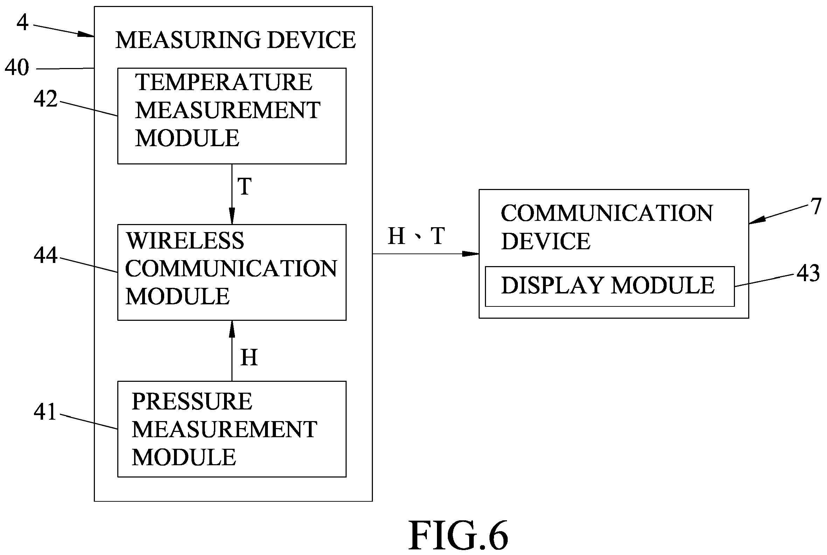

Referring to FIGS. 2, 3 and 6, it should be noted that, the display module 43 may be disposed outside of the main body 40. For example, in a variation of the present embodiment as shown in FIG. 6, the display module 43 is disposed in a communication device 7 (e.g. a mobile device or a smartphone) outside of the main body 40.

In this variation of the embodiment, the measuring device 4 further includes a wireless communication module 44 that is disposed in the main body 40, that is electrically connected to the pressure measurement module 41 and the temperature measurement module 42, and that is wirelessly connected to the display module 43 via the communication device 7 for transmitting the pressure value (H) and the temperature value (T) to the display module 43.

During each cycle of the nail-striking operation, the pressure value (H) and temperature value (T) are wirelessly sent to the display module 43 in the communication device 7, such that a remote observer can monitor the operation of the nail gun system in real time.

Referring to FIGS. 2 and 3 and FIGS. 6 to 8, it should also be noted that the number of the display section 431 is not limited to one.

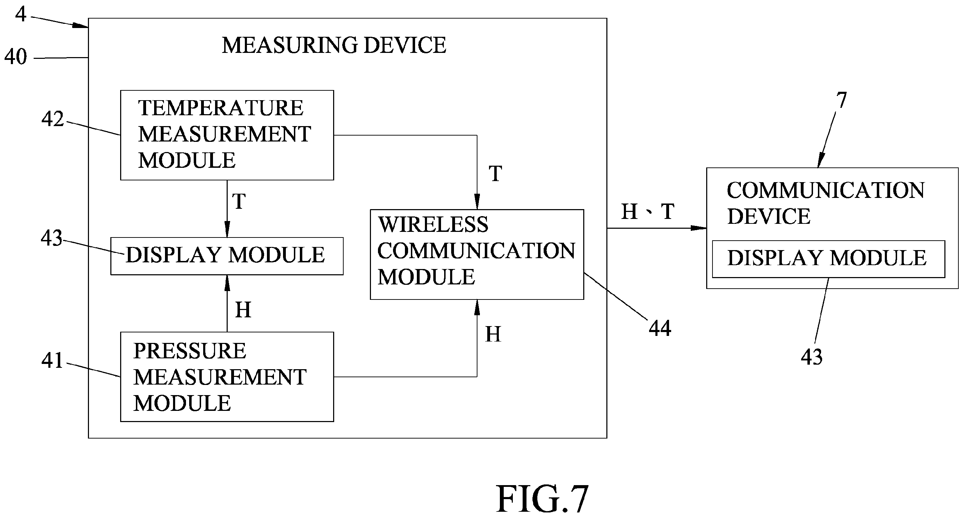

In another variation of the embodiment as shown in FIG. 7, the measuring device 4 includes two display modules 43; one is disposed in the main body 40, and the other is disposed in the communication device 7 outside of the main body 40, so that both the user of the nail gun 3 and the remote observer can be informed of the pressure value (H) and the temperature value (T) in real time.

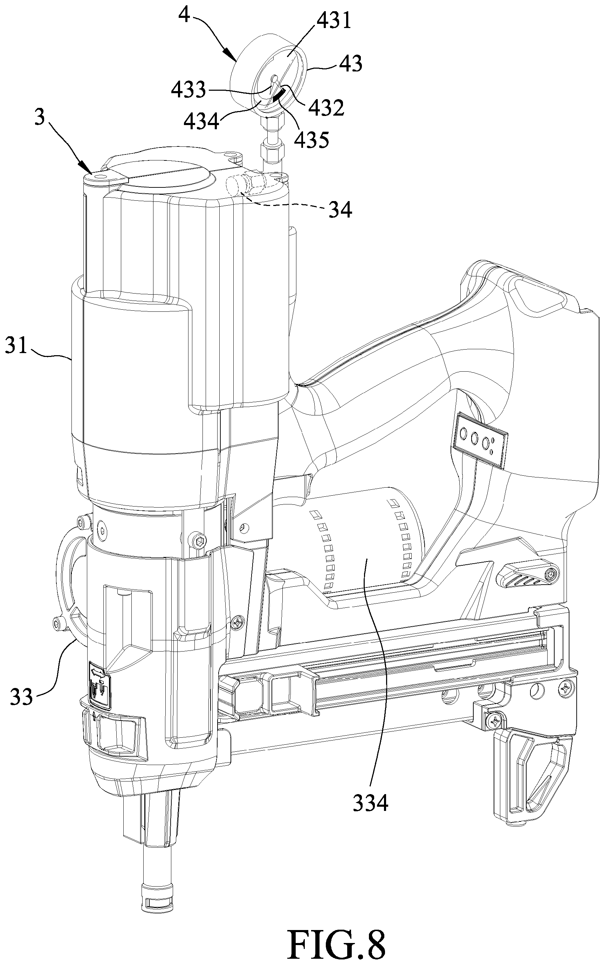

Furthermore, the first and second indicators 432, 433 are not limited to digital numbers. In yet another variation of the embodiment as shown in FIG. 8, the first and second indicators 432, 433 are configured as needle pointers.

In this variation, the display section 431 has a normal zone 434 and an abnormal zone 435; each of the first and second indicators 432, 433 is movable between the normal zone 434 and the abnormal zone 435. Also, the normal and abnormal zones 434, 435 may be color-coded; for example, the normal zone 434 is coded in green, and the abnormal zone 435 is coded in red. The first and second indicators 432, 433 may be configured as long and short needle pointers, respectively.

If the first indicator 432 (i.e. long needle pointer) moves into the abnormal zone 435, it means that the air pressure is insufficient for operation; if the second indicator 433 (i.e. short needle pointer) moves into the abnormal zone 435, it means that the cylinder unit 32 is overheated, and components of the nail gun 3 are susceptible to damage.

In sum, compared with the prior art, the present embodiment and its variations of the disclosure have the advantage of displaying the pressure and temperature values (H, T) in real time, so that the user or the remote observer can take action to avoid compromised nail-striking operation and to prevent unnecessary damages to the components of the nail gun 3.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A nail gun system including a nail gun (3) that includes a cylinder unit (32), an inlet valve (34) being mounted to the cylinder unit (32), and adapted for allowing air to enter the cylinder unit (32), and a power unit (33) operable for increasing an air pressure inside the cylinder unit (32), and further operable for striking a nail (6) using the air pressure, said nail gun being **characterized by**:
a measuring device (4) that is connected to the nail gun (3), and that includes
a pressure measurement module (41) adapted for measuring a pressure value (H) of the air inside the cylinder unit (32), and
at least one display module (43) including a display section (431), and a first indicator (432) for indicating the pressure value (H) on said display section (431).

2. The nail gun system as claimed in Claim 1, **characterized in that** said measuring device (4) is connected directly to one of the cylinder unit (32) and the inlet valve (34).

3. The nail gun system as claimed in any of Claims 1 and 2, **characterized in that** said first indicator (432) is a digital number.

4. The nail gun system as claimed in any of Claims 1 and 2, **characterized in that**:
said display section (431) has a normal zone (434) and an abnormal zone (435); and
said first indicator (432) is configured as a needle pointer, and is movable between said normal and abnormal zones (434, 435).

5. The nail gun system as claimed in any of Claims 1 to 4, **characterized in that**:
said measuring device (4) further includes a main body (40);
said at least one display module (43) of said measuring device (4) is disposed in said main body (40) ; and
said pressure measurement module (41) of said measuring device (4) is disposed in said main body (40) and is electrically connected to said at least one display module (43).

6. The nail gun system as claimed in any of Claims 1 to 4, **characterized in that**:
said measuring device (4) further includes a main body (40);
said at least one display module (43) is disposed outside of said main body (40);
said pressure measurement module (41) of said measuring device (4) is disposed in said main body (40) ; and
said measuring device (4) further includes a wireless communication module (44) that is disposed in said main body (40), that is electrically connected to said pressure measurement module (41), and that is wirelessly connected to said at least one display module (43) for transmitting the pressure value (H) to said at least one display module (43).

7. The nail gun system as claimed in any of Claims 1 to 4, **characterized in that**:
said measuring device (4) further includes a main body (40);
said at least one display module (43) includes two display modules (43), one of said display modules (43) being disposed in said main body (40), the other one of said display modules (43) being disposed outside of said main body (40);
said pressure measurement module (41) of said measuring device (4) is disposed in said main body (40) and is electrically connected to said one of said display modules (43); and
said measuring device (4) further includes a wireless communication module (44) that is disposed in said main body (40), that is electrically connected to said pressure measurement module (41), and that is wirelessly connected to said other one of said display modules (43) for transmitting the pressure value (H) to said other one of said display modules (43).

8. The nail gun system as claimed in any of Claims 1 and 2, **characterized in that**:
said measuring device (4) further includes a temperature measurement module (42) adapted for measuring a temperature value (T) inside said cylinder unit (32); and
said at least one display module (43) further includes a second indicator (433) for indicating the temperature value (T) on said display section (431).

9. The nail gun system as claimed in Claim 8, **characterized in that**:
said measuring device (4) further includes a main body (40);
said at least one display module (43) of said measuring device (4) is disposed in said main body (40) ; and
said pressure measurement module (41) and said temperature measurement module (42) of said measuring device (4) are disposed in said main body (40) and are electrically connected to said at least one display module (43).

10. The nail gun system as claimed in Claim 8, **characterized in that**:
said measuring device (4) further includes a main body (40);
said at least one display module (43) is disposed outside of said main body (40);
said pressure measurement module (41) and said temperature measurement module (42) of said measuring device (4) is disposed in said main body (40); and
said measuring device (4) further includes a wireless communication module (44) that is disposed in said main body (40), that is electrically connected to said pressure measurement module (41) and said temperature measurement module (42), and that is wirelessly connected to said at least one display module (43) for transmitting the pressure value (H) and the temperature value (T) to said at least one display module (43).

11. The nail gun system as claimed in Claim 8, **characterized in that**:
said measuring device (4) further includes a main body (40);
said at least one display module (43) includes two display modules (43), one of said display modules (43) being disposed in said main body (40), the other one of said display modules (43) being disposed outside of said main body (40);
said pressure measurement module (41) and said temperature measurement module (42) of said measuring device (4) are disposed in said main body (40) and are electrically connected to said one of said display modules (43); and
said measuring device (4) further includes a wireless communication module (44) that is disposed in said main body (40), that is electrically connected to said pressure measurement module (41) and said temperature measurement module (42), and that is wirelessly connected to said other one of said display modules (43) for transmitting the pressure value (H) and the temperature value (T) to said other one of said display modules (43).

12. The nail gun system as claimed in any of Claims 8 to 11, **characterized in that** at least one of said first and second indicators (432, 433) is a digital number.

13. The nail gun system as claimed in any of Claims 8 to 11, **characterized in that**:
said display section (431) has a normal zone (434) and an abnormal zone (435); and
at least one of said first and second indicators (432, 433) is configured as a needle pointer, and is movable between said normal and abnormal zones (434, 435).
